# EUROPEAN PATENT SPECIFICATION

(11) **EP 2 044 872 B1**
(45) Date of publication and mention of the grant of the patent: **09.12.2009**
(21) Application number: 07019272.9
(22) Date of filing: 01.10.2007
(51) Int. Cl.: A47J 42/04

(54) **Mill for grinding edible particles**
Mühle zum Mahlen essbarer Partikel
Moulin pour moudre des particules comestibles

(43) Date of publication of application: 08.04.2009
(73) Proprietor: Wang Wu, Ching Yueh, Tainan City (TW)
(72) Inventor: Wang Wu, Ching Yueh, Tainan City (TW)
(74) Representative: Volpert, Marcus

(56) References cited:
- FR-A- 2 499 840
- US-A1- 2007 210 195

## Description

### BACKGROUND OF THE INVENTION

### 1. Field of the Invention

This invention relates to a mill for grinding edible particles, particularly to one able to keep the edible particles ground into powder to drop down from powder outlets by clockwise turning around a rotating knob, preventing the powder from dropping on a table by counterclockwise turning around the rotating knob to close the powder outlets while not using, and obtaining diverse sizes of the powder by altering a distance between a grinding block and a grinding base.

### 2. Description of the Prior Art

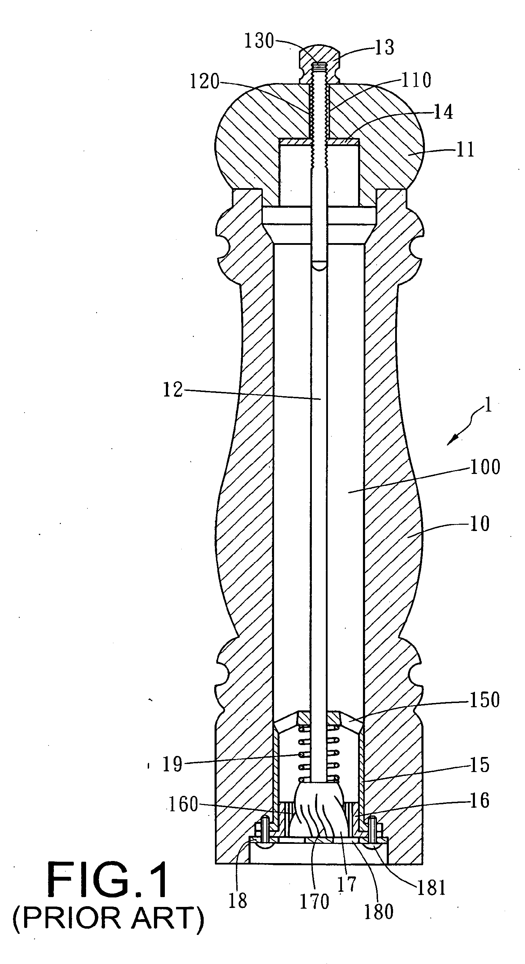

Commonly, as shown in Fig. 1, a conventional mill 1 is mainly provided with a main body 10 having a chamber 100 inside it, a rotator 11 bored with a through hole 110, a shaft 12 installed inside the main body 10 with male threads 120 formed around its upper end, an adjusting knob 13 pivotally positioned on the top of the rotator 11, and a positioning plate 14 inserted inside the rotator 11. The adjusting knob 13 is provided with a threaded hole 130 bored inside it for engaging with the male threads 120 of the shaft 12. A positioning base 15 is set in the bottom of the chamber 100 of the main body 10, provided with plural openings 150. A grinding base 16 is installed at the bottom of the positioning base 15, provided with grinding teeth 160 formed inside it. Installed at the bottom of the shaft 12 inside the grinding base 16 is a grinding block 17 that is provided with plural grinding teeth 170 formed on its outer surface. And, positioned at the bottom of the grinding base 16 is a positioning plate 18, which is fixed with the main body 10 by means of fastening elements 181, provided with plural openings 180. On the grinding block 17 is set with a compression spring 19 having its one end leaned on the bottom of the positioning base 15. Via turning around the adjusting knob 13 to vary the space between the grinding block 17 and the grinding base 16, edible particles such as pepper particles can be ground into finer ones. In using, as the rotator 11 is turned around to synchronously drive the shaft 12 and the grinding block 17 to rotate, the edible particles are to be ground between the grinding teeth 170 of the grinding block 17 and the grinding teeth 160 of the grinding base 16 to become finer ones dropping down through the openings 180 of the positioning plate 18. However, as the mill 1 is put back on a table after using, some ground powder still remained in the main body 10 is to drop on and smear the table. A document reflecting said state of the art is FR-A-2499840. Therefore, the invention has been devised to overcome the defects mentioned above.

### SUMMARY OF THE INVENTION

The objective of this invention is to offer a mill for grinding edible particles, able to gain various sizes of powder and prevent powder from dropping on a table.

The main feature of a mill for grinding edible particles of the invention is to include:
a cover 4 mounted on a shaft 3 inside a recessed chamber 21 of a main body 2 and provided with a through hole 40 and plural openings 41, a pair of positioning plates 42 symmetrically extended downward from a wall of the cover 4 with an engaging projection 43 formed thereon respectively, and a spring 45 set at a bottom of the cover 4 to be mounted on the shaft 3;
a grinding base 5 positioned under the cover 4 and provided with a pair of recessed grooves 50 symmetrically formed around its outer wall, an opening 51 bored in a center of the grinding base 5, plural slopes 52 formed around an upper inner wall of the opening 51, and plural spiral grinding teeth 53 formed around a lower inner wall of the opening 51, a grinding block 54 installed in the opening 51 and bored with a polygonal through hole 55 in its center and formed with plural spiral grinding teeth 56 on its outer surface with a direction opposite to the spiral grinding teeth 53, a positioning block 57 installed under the grinding block 54 and provided with a polygonal through hole 570 and a recess 571 formed under the polygonal through hole 570 for fitting with a spring 58;
a rotator 6 installed under the grinding block 54 and provided with a pair of bars 60 symmetrically extended from its outer wall, a through hole 61 bored in a center of the rotator 6, a recess 62 formed under the through hole 61, and plural openings 63 formed in the rotator 6;
an anti-leaking cover 7 installed under the rotator 6 and provided with a pair of covering plates 70 formed symmetrically around its circumference, a through hole 71 bored in a center of the anti-leaking cover 7, plural ratchets 72 formed around a top surface of the anti-leaking cover 7, a ratchet block 73 positioned on a top of the anti-leaking cover 7, the ratchet block 73 formed with plural ratchets 74 around its bottom for corresponding to the ratchets 72 of the anti-leaking cover 7 and bored with a polygonal through hole 75 in its center and extended downward from its bottom with a projection 76 to be fitted in the through hole 71 of the anti-leaking cover 7;
a bottom base 8 positioned under the cover 4 inside the recessed chamber 21 of the main body 2 and provided with a chamber 81 formed inside it, a pair of projections 82 symmetrically formed around a top edge of the chamber 81, a pair of notches 83 symmetrically cut around a wall of the bottom base 8, an annular locking edge 84 formed around an upper outer wall of the bottom base 8, a through hole 85 and plural powder outlets 86 bored at a bottom of the bottom base 8, and a pair of blocking strips 87 symmetrically formed at a bottom of the chamber 81; and
an adjustment rotating base 9 fitted with the bottom base 8 and provided with a chamber 90 formed inside it, a locking groove 91 formed in an upper inner wall of the chamber 90, plural openings 92 formed at a bottom of the chamber 90, a pair of notches 93 symmetrically cut around a wall of the adjustment rotating base 9, a plurality of positioning grooves 94 with various levels slantwise formed under each of the notches 93.

### BRIEF DESCRIPTION OF DRAWINGS

This invention is better understood by referring to the accompanying drawings, wherein:
Fig. 1 is a cross-sectional view of a conventional mill;
Fig. 2 is an exploded perspective view of a preferred embodiment of a mill for grinding edible particles in the present invention;

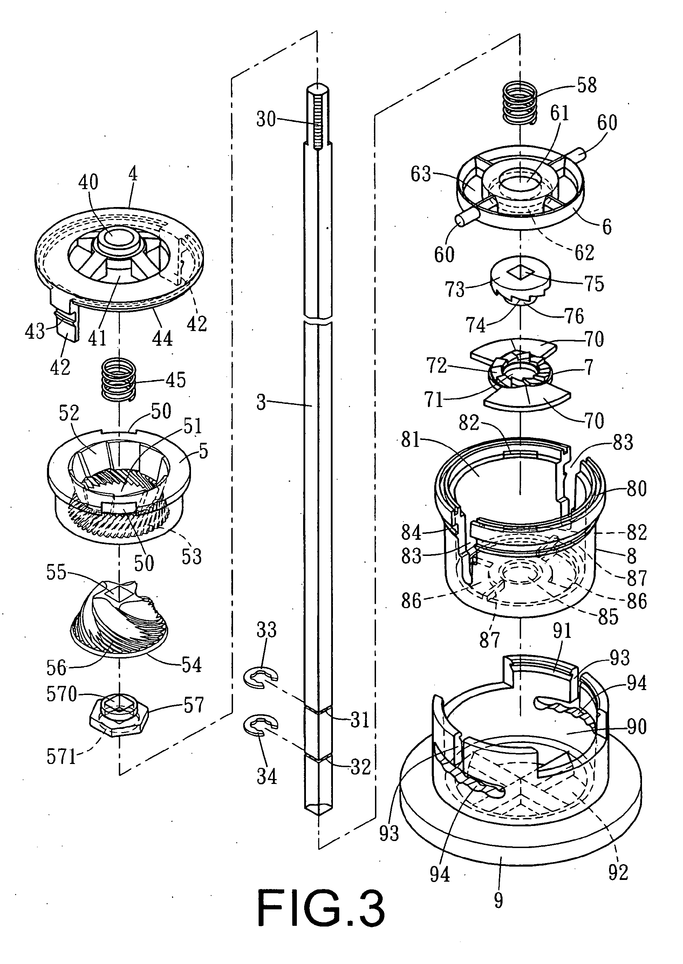

Fig. 3 is a partial exploded perspective view of the preferred embodiment of a mill for grinding edible particles in the present invention;

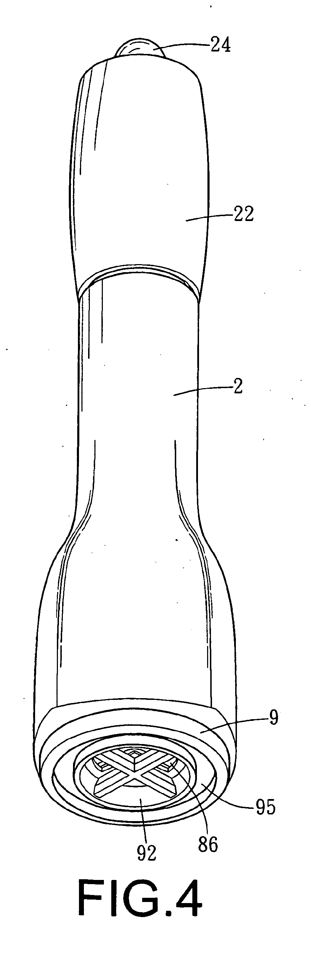

Fig. 4 is a perspective view of the preferred embodiment of a mill for grinding edible particles in the present invention;
Fig. 5 is a cross-sectional view of the preferred embodiment of a mill for grinding edible particles in the present invention;

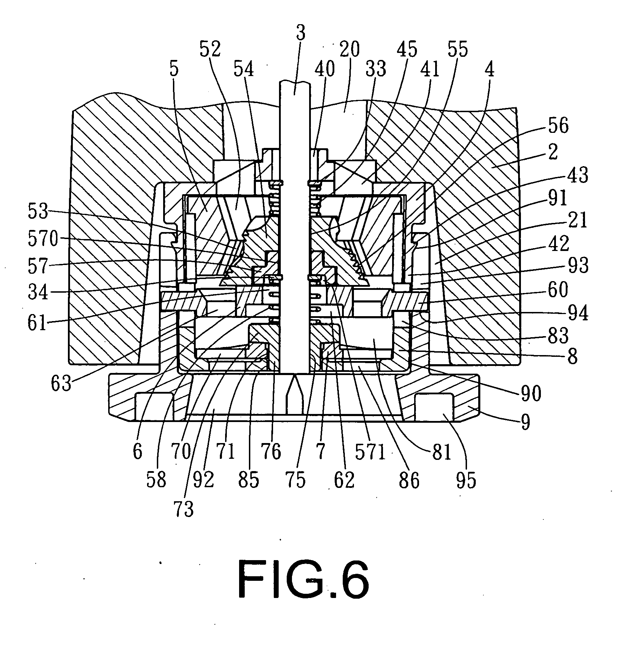

Fig. 6 is a first partial magnified cross-sectional view of the preferred embodiment of a mill for grinding edible particles in the present invention;

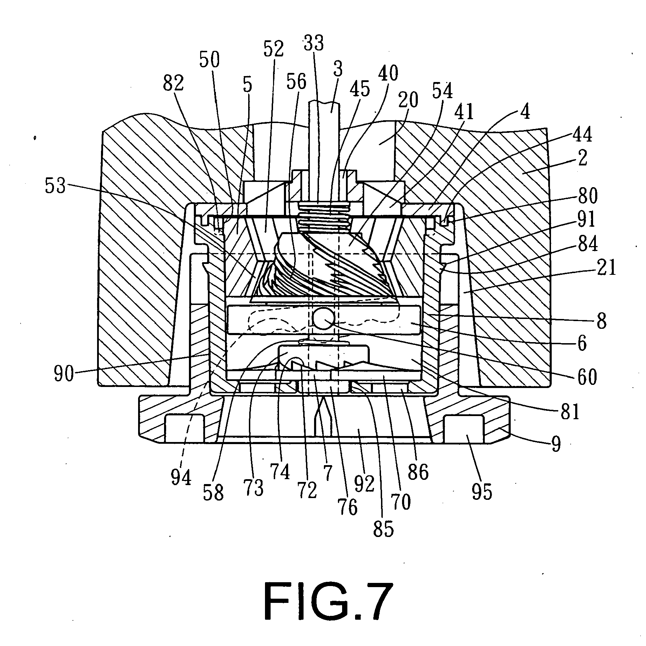

Fig. 7 is a second partial magnified cross-sectional view of the preferred embodiment of a mill for grinding edible particles in the present invention;

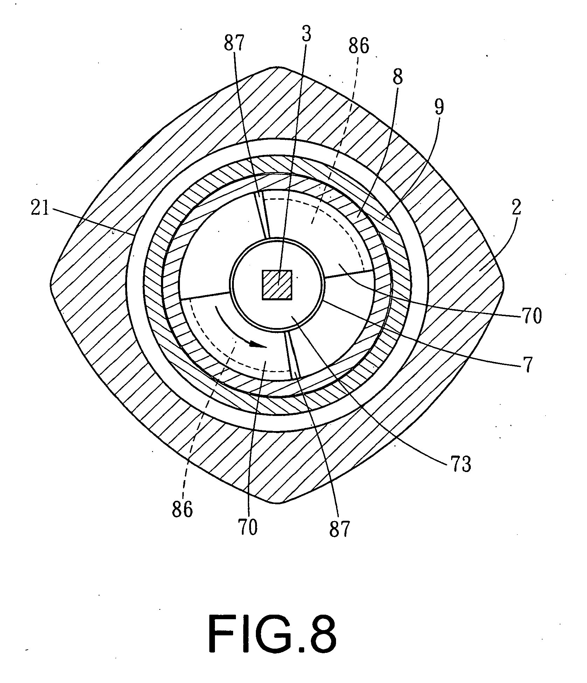

Fig. 8 is a partial cross-sectional view of the preferred embodiment of a mill for grinding edible particles in the present invention, showing powder outlets being covered by an anti-leaking cover;

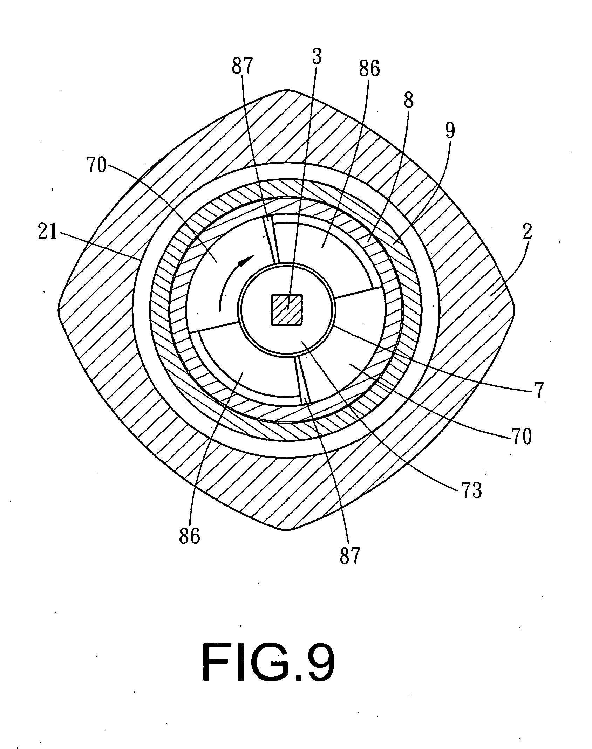

Fig. 9 is a partial cross-sectional view of the preferred embodiment of a mill for grinding edible particles in the present invention, showing the powder outlets being uncovered by the anti-leaking cover; and
Fig. 10 is a partial cross-sectional view of the preferred embodiment of a mill for grinding edible particles in the present invention, showing a distance between a grinding block and a grinding base being altered by turning around an adjustment rotating base.

### DETAILED DESCRIPTION OF THE PREFERRED EMBODIMENT

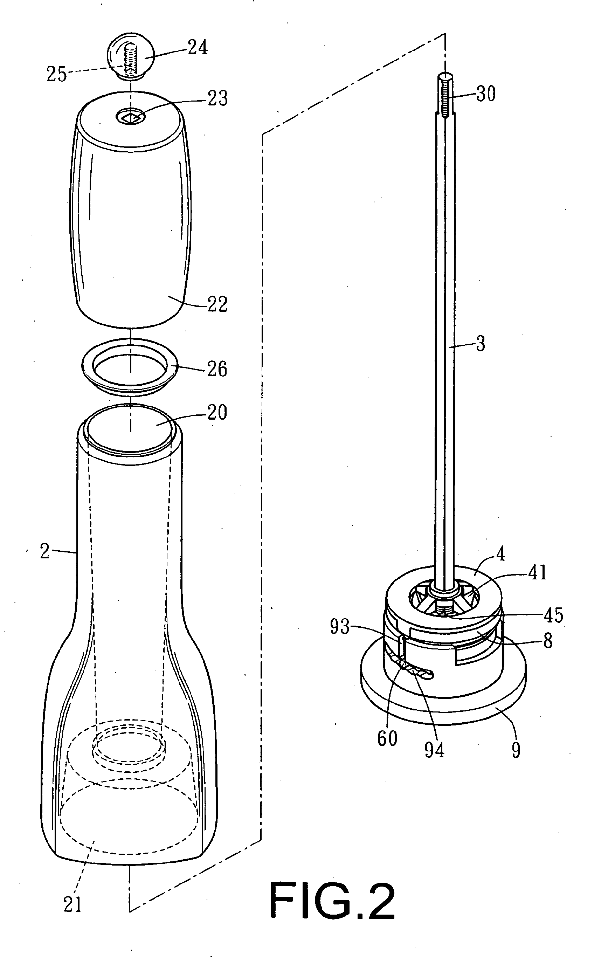

As shown in Figs. 2∼5, a preferred embodiment of a mill for grinding edible particles in the present invention is composed of a main body 2, a shaft 3, a cover 4, a grinding base 5, a rotator 6, an anti-leaking cover 7, a bottom base 8 and an adjustment rotating base 9.

The main body 2 is provided with a chamber 20 formed inside it, a recessed chamber 21 formed under the chamber 20, a rotating knob 22 fixed at its top, a polygonal through hole 23 bored on a top of the rotating knob 22, a positioning block 24 installed on the top of the rotating knob 22 with a threaded hole 25, and a washer 26 fixed between the rotating knob 22 and the main body 2.

The shaft 3 formed as a polygonal bar is installed inside the main body 2 and the rotating knob 22, provided with male threads 30 formed around its upper end, two annular locking slots 31 and 32 formed in its lower portion for engaging with two C-shaped locking rings 33 and 34.

The cover 4 is mounted on the shaft 3 inside the recessed chamber 21, provided with a through hole 40, plural openings 41, a pair of positioning plates 42 symmetrically extended downward from its wall with an engaging projection 43 formed on them respectively, an annular projection 44 formed at its bottom, and a spring 45 set at its bottom to be mounted on the shaft 3.

The grinding base 5 is positioned under the cover 4, provided with a pair of recessed grooves 50 symmetrically formed around its outer wall, an opening 51 bored in its center, plural slopes 52 formed around an upper inner wall of the opening 51, and plural spiral grinding teeth 53 formed around a lower inner wall of the opening 51. A grinding block 54 is installed in the opening 51 of the grinding base 5, bored with a polygonal through hole 55 in its center and formed with plural spiral grinding teeth 56 on its outer surface with a direction opposite to the spiral grinding teeth 53. Installed under the grinding block 54 is a positioning block 57 that is provided with a polygonal through hole 570, and a recess 571 formed under the polygonal through hole 570 for fitting with a spring 58.

The rotator 6 is installed under the grinding block 54, provided with a pair of bars 60 symmetrically extended from its outer wall of the rotator 6, a through hole 61 bored in its center, a recess 62 formed under the through hole 61, and plural openings 63 formed in the rotator 6.

The anti-leaking cover 7 is installed under the rotator 6, provided with a pair of covering plates 70 formed symmetrically around its circumference, a through hole 71 bored in its center, plural ratchets 72 formed around its top surface, a ratchet block 73 positioned on its top. The ratchet block 73 is formed with plural ratchets 74 at its bottom for engaging with the ratchets 72, bored with a polygonal through hole 75, and extended downward from its bottom with a projection 76 to be fitted in the through hole 71.

The bottom base 8 is positioned under the cover 4 inside the recessed chamber 21 of the main body 2, provided with an annular groove 80 formed around its top edge, a chamber 81 formed inside it, a pair of projections 82 symmetrically formed around a top edge of the chamber 81, a pair of notches 83 symmetrically cut around a wall of the bottom base 8, an annular locking edge 84 formed around an upper outer wall of the bottom base 8, a through hole 85 and two powder outlets 86 bored at a bottom of the bottom base 8, and a pair of blocking strips 87 symmetrically formed at a bottom of the chamber 81.

The adjustment rotating base 9 is fitted with the bottom base 8, provided with a chamber 90 formed inside it, a locking groove 91 formed in an upper inner wall of the chamber 90, plural openings 92 formed at a bottom of the chamber 90, a pair of notches 93 symmetrically cut around a wall of the adjustment rotating base 9, plural positioning grooves 94 with various levels slantwise formed under each of the notches 93, and an annular groove 95 formed at a bottom of the adjustment rotating base 9.

In assembling, as shown in Figs. 2∼7, the bottom base 8 is firstly placed in the chamber 90 of the adjustment rotating base 9, with the notches 83 of the bottom base 8 corresponding to the notches 93 of the adjustment rotating base 9, so as to keep the locking edge 84 engaged with the locking groove 91.

Secondly, put the ratchet block 73 on the anti-leaking cover 7, keeping the projection 76 of the ratchet block 73 inserted in the through hole 71, with the ratchets 74 of the ratchet block 73 engaged with the ratchets 72 of the anti-leaking cover 7.

Thirdly, the combination of the anti-leaking cover 7 with the ratchet block 73 is then installed in the chamber 81 of the bottom base 8 to keep the projection 76 of the ratchet block 73 positioned in the through hole 85 of the bottom base 8. By the time, the powder outlets 86 of the bottom base 8 are covered by the covering plates 70 of the anti-leaking cover 7.

Fourthly, the rotator 6 is set in the chamber 81 of the bottom base 8 to enable the bars 60 of the rotator 6 fitted in the notches 83 of the bottom base 8 and to rest on one of the positioning grooves 94.

Fifthly, the spring 58 is mounted around the shaft 3 that is further inserted through the through hole 61 of the rotator 6 and the polygonal through hole 75 of the ratchet block 73, and then the annular locking slot 32 is engaged with the annular locking ring 34, so as to keep the spring 58 constricted between the annular locking ring 34 and the ratchet block 73.

Sixthly, the positioning block 57 and the grinding block 54 are then sequently penetrated by the shaft 3 via the polygonal through holes 570 and 55 of the positioning block 57 and the grinding block 54 respectively.

Seventhly, the grinding base 5 is placed in the chamber 81 of the bottom base 8 to rest outside the grinding block 54 with the projections 82 of the bottom base 8 inserted into the recessed grooves 50 of the grinding base 5.

Eighthly, the spring 45 is mounted around the shaft 3, and then the annular locking slot 31 is engaged with the annular locking ring 33, so as to keep the spring 45 constricted between the annular locking ring 33 and the grinding block 54.

Ninthly, the cover 4 is put on the bottom base 8, keeping the positioning plates 42 engaged with the notches 83 of the bottom base 8, the annular projection 44 engaged with the annular groove 80, and the engaging projections 43 of the positioning plates 42 fitted in the locking groove 91, for stably fixing the cover 4 on the bottom base 8.

Finally, the whole assembly of the components mentioned above is inserted in the recessed chamber 21 of the main body 2 by passing the shaft 3 through the chamber 20 of the main body 2 and the polygonal through hole 23 of the rotating knob 22 orderly. And, via engaging the male threads 30 of the shaft 3 with the threaded hole 25 of the positioning block 24, the shaft 3 is fixed with the positioning block 24, finishing assembling

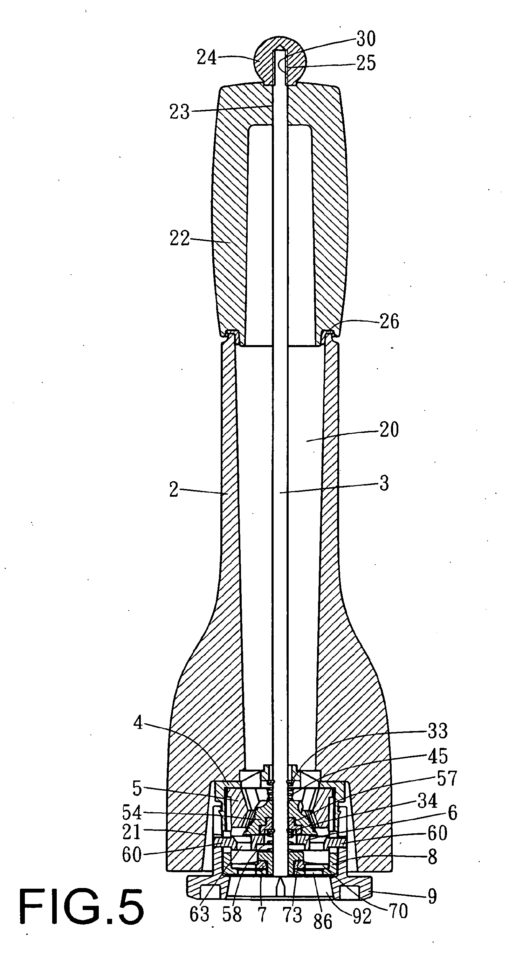

In using, as shown in Figs. 5∼9, when edible particles such as those of pepper are to be ground, they are first put into the chamber 20 of the main body 2. Next, turn around the rotating knob 22 of the main body 2 clockwise so as to sequently drive the shaft 3, the grinding block 54, the positioning block 57 and the ratchet block 73 to spin as well. By the time, the particles staying between the grinding base 5 and the grinding block 54 are to be ground finer by the plural spiral grinding teeth 56 of the grinding block 54 and the plural spiral grinding teeth 53 of the grinding base 5. And, as the anti-leaking cover 7 is driven by the ratchet block 73 to rotate, the covering plates 70 are consequently turned around to move away from the powder outlets 86. However, as soon as the covering plates 70 of the anti-leaking cover 7 is moved to contact with the blocking strips 87, the anti-leaking cover 7 is to be stopped by the blocking strips 87. It should be noted that as the anti-leaking cover 7 is engaged with the ratchet block 73 merely by means of the contact between the single slopes of the ratchets 72 and those of the ratchets 74, the ratchet block 73 can keep on rotating on the anti-leaking cover 7. And, being elastically squeezed by the spring 58, the ratchet block 73 is to jumpily move on the anti-leaking cover 7. With the powder outlets 86 of the bottom base 8 uncovered by the covering plates 70, the ground powder can sequentially drop down from the powder outlets 86 and the openings 92 of the adjustment rotating base 9 for use.

When the mill is no longer to be used , a user just has to turn around the rotating knob 22 counterclockwise to sequentially drive the shaft 3, the grinding block 54, the positioning block 57 and the ratchet block 73 to rotate in the same direction. By the time, as the vertical surfaces of the ratchets 74 of the ratchet block 73 are contacting with those of the ratchets 72 of the anti-leaking cover 7, the anti-leaking cover 7 can be also activated to move counterclockwise, thus enabling the covering plates 70 of the anti-leaking cover 7 to rest on the powder outlets 86 again to prevent the powder from dropping out of the powder outlets 86. So, the powder remained inside the mill will not drop on the table while the mill is put on the table without being used.

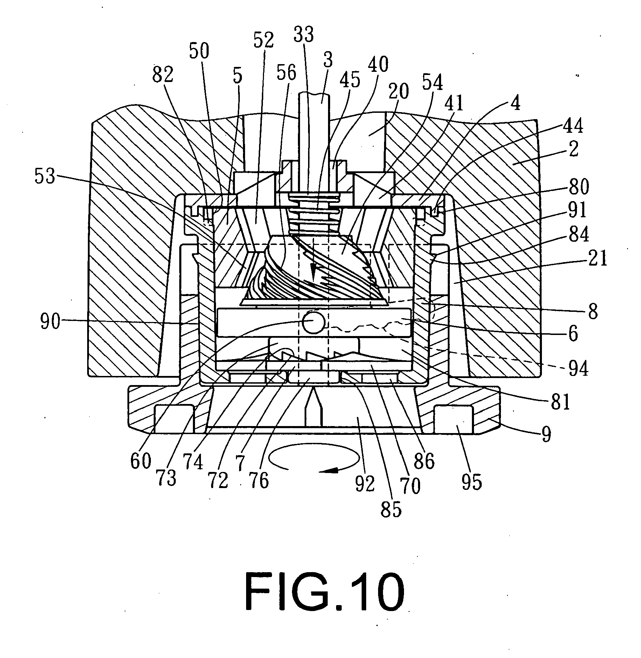

As shown in Fig. 10, a user only has to turn around the adjustment rotating base 9 to keep the bars 60 of the rotator 6 moved in the positioning grooves 94 of the adjustment rotating base 9, so as to obtain diverse sizes of powder. If coarser powder is needed, the adjustment rotating base 9 must be whirled to make the positioning grooves 94 at lower levels corresponding to the bars 60 and by the time, the rotator 6 and the grinding block 54 are elastically compressed downward by the spring 45 to keep the bars 60 of the rotator 6 positioned in the positioning grooves 94 at the lower levels, thus providing a wider distance between the grinding block 54 and the grinding base 5 to gain coarser powder. On the contrary, if finer powder is preferred, the adjustment rotating base 9 must be conversely whirled to make the positioning grooves 94 at higher levels corresponding to the bars 60 and by the time, the rotator 6 is moved upwardly to push up the grinding block 54 to compress the spring 45 to keep the bars 60 of the rotator 6 positioned in the positioning grooves 94 at the higher levels, thus providing a narrower distance between the grinding block 54 and the grinding base 5 to gain finer powder.

While the preferred embodiment of the invention has been described above, it will be recognized and understood that various modifications may be made therein that fall within the scope of appended claims.

## Claims

1. A mill for grinding edible particles, said mill comprising:
a main body (2) provided with a chamber (20) formed inside it, a recessed chamber (21) formed under said chamber (20), a rotating knob (22) fixed on a top of said main body (2), a polygonal through hole (23) bored on a top of said rotating knob (22), a positioning block (24) installed on said top of said rotating knob (22), and a washer (26) fixed between said rotating knob (22) and said main body (2);
a shaft (3) installed inside said main body (2) and said rotating knob (22), said shaft (3) formed as a polygonal bar and provided with two annular locking slots (31,32) formed in its lower portion for engaging with locking rings (33,34);
**characterized by**
a cover (4) mounted on said shaft (3) inside said recessed chamber (21) of said main body (2) and provided with a through hole (40) and plural openings (41), a pair of positioning plates (42) symmetrically extended downward from a wall of said cover (4) with an engaging projection (43) formed thereon respectively, and a spring (45) set at a bottom of said cover (4) to be mounted on said shaft (3);
a grinding base (5) positioned under said cover (4) and provided with a pair of recessed grooves (50) symmetrically formed around its outer wall, an opening (51) bored in a center of said grinding base (5), plural slopes (52) formed around an upper inner wall of said opening (51), and plural spiral grinding teeth (53) formed around a lower inner wall of said opening (51), a grinding block (54) installed in said opening (51) and bored with a polygonal through hole (55) in its center and formed with plural spiral grinding teeth (56) on its outer surface with a direction opposite to said spiral grinding teeth (53), a positioning block (57) installed under said grinding block (54) and provided with a polygonal through hole (570) and a recess (571) formed under said polygonal through hole (570) for fitting with a spring (58);
a rotator (6) installed under said grinding block (54) and provided with a pair of bars (60) symmetrically extended from its outer wall, a through hole (61) bored in a center of said rotator (6), a recess (62) formed under said through hole (61), and plural openings (63) formed in said rotator (6);
an anti-leaking cover (7) installed under said rotator (6) and provided with a pair of covering plates (70) formed symmetrically around its circumference, a through hole (71) bored in a center of said anti-leaking cover (7), plural ratchets (72) formed around a top surface of said anti-leaking cover (7), a ratchet block (73) positioned on a top of said anti-leaking cover (7), said ratchet block (73) formed with plural ratchets (74) around its bottom for corresponding to said ratchets (72) of said anti-leaking cover (7) and bored with a polygonal through hole (75) in its center and extended downward from its bottom with a projection (76) to be fitted in said through hole (71) of said anti-leaking cover (7);
a bottom base (8) positioned under said cover (4) inside said recessed chamber (21) of said main body (2) and provided with a chamber (81) formed inside it, a pair of projections (82) symmetrically formed around a top edge of said chamber (81), a pair of notches (83) symmetrically cut around a wall of said bottom base (8), an annular locking edge (84) formed around an upper outer wall of said bottom base (8), a through hole (85) and plural powder outlets (86) bored at a bottom of said bottom base (8), and a pair of blocking strips (87) symmetrically formed at a bottom of said chamber (81); and
an adjustment rotating base (9) fitted with said bottom base (8) and provided with a chamber (90) formed inside it, a locking groove (91) formed in an upper inner wall of said chamber (90), plural openings (92) formed at a bottom of said chamber (90), a pair of notches (93) symmetrically cut around a wall of said adjustment rotating base (9), plural positioning grooves (94) with various levels slantwise formed under each of said notches (93).

2. The mill for grinding edible particles as claimed in Claim 1, wherein said positioning block (24) of said main body (2) is provided with a threaded hole (25) for engaging with male threads (30) formed around a top end of said shaft (3).

3. The mill for grinding edible particles as claimed in Claim 1, wherein said cover (4) is provided with an annular projection (44) formed at its bottom for engaging with an annular groove (80) formed around a top edge of said bottom base (8).

## Patentansprüche

1. Mühle zum Mahlen eßbarer Partikel, umfassend:
einen Hauptkörper (2), der mit einer Kammer (20) versehen ist, welche in seinem Inneren ausgebildet ist, eine ausgesparte Kammer (21), die sich unter der Kammer (20) befindet, einen Drehknopf (22), der oben auf dem Hauptkörper (2) befestigt ist, ein polygonales Durchgangsloch (23), das oben auf dem Drehknopf (22) ausgebohrt ist, einen Positionierungsblock (24), der oben auf dem Drehknopf angebracht ist, und eine Unterlegscheibe (26), die zwischen dem Drehknopf (22) und dem Hauptkörper (2) befestigt ist;
ferner umfassend eine Welle (3), die im Inneren des Hauptkörpers (2) und des Drehknopfes (22) eingebaut ist und als polygonale Stange ausgebildet und mit zwei ringförmigen Verriegelungsschlitzen (31, 32) versehen ist, die sich in ihrem unteren Teil befinden, um mit den Verriegelungsringen (33, 34) in Eingriff zu treten; **gekennzeichnet durch**
einen Deckel (4), der auf der Welle (3), im Inneren der ausgesparten Kammer (21) des Hauptkörpers (2) gelagert ist und mit einem Durchgangsloch (40) sowie mehreren Öffnungen (41) versehen ist sowie einem Paar Positionierungsplatten (42), die sich von einer Wand des Deckels (4) symmetrisch nach unten erstrecken und auf denen ein eingreifender Vorsprung (43) ausgebildet ist, wobei an einem Boden des Deckels (4) eine Feder (45) angeordnet ist, die auf der Welle (3) gelagert ist;
ferner **gekennzeichnet durch** einen Mahlboden (5), der unter dem Deckel (4) angeordnet und mit einem Paar hinterschnittener Nuten (50) versehen ist, welche symmetrisch rund um seine äußere Wandung ausgebildet sind, des weiteren **durch** eine Öffnung (51), die in der Mitte des Mahlbodens (5) eingebohrt ist, mehrere Schrägflächen (52), die rund um eine obere Innenwandung der Öffnung (51) ausgebildet sind, und mehrere spiralförmige Mahlzähne (53), die sich rund um eine untere Innenwand der Öffnung (51) erstrecken, des weiteren **gekennzeichnet durch** einen Mahlblock (54), der in die Öffnung (51) eingebaut ist und mit einem polygonalen Durchgangsloch (55) in seinem Zentrum versehen ist und mit mehreren spiralförmigen Mahlzähnen (56) auf seiner äußeren Oberfläche, deren Richtung entgegengesetzt zu derjenigen der spiralförmigen Mahlzähne (53) ist, des weiteren **durch** einen Positionierungsblock (57), der unter dem Mahlblock (54) eingebaut ist und mit einem polygonalen Durchgangsloch (570) sowie einer Aussparung (571) versehen ist, die unter dem polygonalen Durchgangsloch (570) liegt, um mit einer Feder (58) in Eingriff zu treten;
des weiteren **gekennzeichnet durch** einen Rotor (6), der unter dem Mahlblock (54) angeordnet und mit einem Paar Stäben (60) versehen ist, die sich symmetrisch von seiner Außenwand aus erstrecken, des weiteren mit einem Durchgangsloch (61), das in der Mitte des Rotors (6) eingebohrt ist, eine Aussparung (62), die unter dem Durchgangsloch (61) liegt, und mehrere Öffnungen (63), die in dem Rotor (6) ausgebildet sind;
des weiteren **gekennzeichnet durch** einen dichten Deckel (7), der unter dem Rotor (6) angebracht und mit einem Paar abdeckender Platten (70) versehen ist, die symmetrisch rund um seinen Umfang ausgebildet sind, wobei ein Durchgangsloch (71) in der Mitte des genannten dichten Deckels (7) eingebohrt ist, mehrere Sperrzähne (72) rund um eine obere Oberfläche des dichten Deckels (7) ausgebildet sind, ein Sperrzahnblock (73) oben auf dem dichten Deckel (7) angeordnet ist, der genannte Sperrzahnblock (73) mit mehreren Sperrzähnen (74) rund um seinen Boden versehen ist, die den genannten Sperrzähnen (72) des dichten Deckels (7) entsprechen, wobei der Ratschenblock mit einem polygonalen Durchgangsloch (75) in seiner Mitte versehen ist, das sich von seinem Boden aus mit einem Vorsprung (76) nach unten erstreckt, der in das Durchgangsloch (71) des dichten Deckels (7) hineingreift;
des weiteren **gekennzeichnet durch** eine Bodenbasis (8), die unter dem Deckel (4) im Inneren der ausgesparten Kammer (21) des Hauptkörpers (2) angeordnet und mit einer Kammer (81) versehen ist, die in seinem Inneren ausgebildet ist, des weiteren mit einem Paar Vorsprüngen (82) die symmetrisch rund um den oberen Rand der Kammer (81) ausgebildet sind, sowie mit einem Paar Aussparungen (83), die symmetrisch rund um eine Wand der Bodenbasis (8) eingeschnitten sind, einen ringförmigen Verriegelungsrand (84), der rund um eine obere äußere Wand der Bodenbasis (8) ausgebildet ist, ein Durchgangsloch (85) und mehrere Partikelpulverlöcher (86), die in einen Boden der Bodenbasis (8) eingebohrt sind, und ein Paar Sperrbänder (87), die am Boden der Kammer (81) symmetrisch ausgebildet sind;
und schließlich **gekennzeichnet durch** eine Drehjustierungsbasis (9), die zu der Bodenbasis (8) paßt und mit einer Kammer (90) in ihrem Inneren versehen ist sowie mit einer Verriegelungsnut (91), die in einer oberen Innenwand der Kammer (90) ausgebildet ist, mehreren Öffnungen (92), die am Boden der Kammer (90) ausgebildet sind, ein Paar Einschnitte (93), die symmetrisch rund um eine Wandung der Drehjustierungsbasis (9) liegen, und **durch** mehrere Positionierungsnuten (94) mit vielfältigen Höhen, die unter jedem der Einschnitte (93) schräg ausgebildet sind.

2. Mühle zum Mahlen von eßbaren Partikeln nach Anspruch 1, **dadurch gekennzeichnet, daß** der Positionierungsblock (24) des Hauptkörpers (2) mit einem Gewindeloch (25) versehen ist, das mit Außengewinden (30) in Eingriff tritt, welche rund um ein oberes Ende der Welle ausgebildet sind.

3. Mühle zum Mahlen von eßbaren Partikeln nach Anspruch 1, **dadurch gekennzeichnet, daß** der Deckel (4) mit einem ringförmigen Vorsprung (44) versehen ist, der an seinem Boden ausgebildet ist und mit einer Ringnut (80) in Eingriff treten soll, welche rund um einen oberen Rand der Bodenbasis (8) ausgebildet ist.

## Revendications

1. Moulin pour moudre des particules comestibles, ledit moulin comprenant :
un corps principal (2) pourvu d'une chambre (20) formée à l'intérieur de lui-même, une chambre en évidement (21) formée au-dessous de ladite chambre (20), un bouton rotatif (22) fixé sur un sommet dudit corps principal (2), un trou traversant polygonal (23) percé sur un sommet dudit bouton rotatif (22), un bloc de positionnement (24) installé sur ledit sommet dudit bouton rotatif (22), et une rondelle (26) fixée entre ledit bouton rotatif (22) et ledit corps principal (2) ;
un arbre (3) installé à l'intérieur dudit corps principal (2) et dudit bouton rotatif (22) ledit arbre (3) étant formé comme une barre polygonale et doté de deux fentes de blocage annulaires (31, 32) formées dans sa portion inférieure pour s'engager avec des bagues de blocage (33, 34) ;
**caractérisé par**
un couvercle (4) monté sur ledit arbre (3) à l'intérieur de ladite chambre en évidement (21) dudit corps principal (2) et pourvu d'un trou traversant (40) et d'une pluralité d'ouvertures (41), une paire de plaques de positionnement (42) qui s'étendent symétriquement vers le bas depuis une paroi dudit couvercle (4) avec une portion d'engagement (43) formée respectivement sur celles-ci, et un ressort (45) placé au niveau du fond dudit couvercle (4) pour être monté sur ledit arbre (3) ;
une base de mouture (5) positionnée au-dessous dudit couvercle (4) et dotée d'une paire de gorges en évidement (50) formées symétriquement autour de sa paroi extérieure, une ouverture (51) percée dans un centre de ladite base de mouture (5), une pluralité de pentes (52) formées autour d'une paroi intérieure supérieure de ladite ouverture (51), et une pluralité de dents de mouture en spirale (53) formées autour d'une paroi intérieure inférieure de ladite ouverture (51), un bloc de mouture (54) installé dans ladite ouverture (51) et percé avec un trou traversant polygonal (55) en son centre et formé avec une pluralité de dents de mouture en spirale (56) sur sa surface extérieure avec une direction opposée auxdites dents de mouture en spirale (53), un bloc de positionnement (57) installé au-dessous dudit bloc de mouture (54) et pourvu d'un trou traversant polygonal (570) et d'un évidement (571) formé au-dessous dudit trou traversant polygonal (570) pour s'adapter avec un ressort (58) ;
un élément rotatif (6) installé au-dessous dudit bloc de mouture (54) et pourvu d'une paire de barres (60) qui s'étendent symétriquement depuis sa paroi extérieure, un trou traversant (61) percé dans un centre dudit élément rotatif (6), un évidement (62) formé au-dessous dudit trou traversant (61), et une pluralité d'ouvertures (63) formées dans ledit élément rotatif (6) ;
un couvercle anti-fuite (7) installé au-dessous dudit élément rotatif (6) et pourvu d'une paire de plaques de couverture (70) formées symétriquement autour de sa circonférence, un trou traversant (71) percé dans un centre dudit couvercle anti-fuite (7), une pluralité de loquets (72) formés autour d'une surface supérieure dudit couvercle anti-fuite (7), un bloc à loquets (73) positionné sur un sommet dudit couvercle anti-fuite (7), ledit bloc à loquets (73) étant formé avec une pluralité de loquets (74) autour de sa partie inférieure pour correspondre auxdits loquets (72) dudit couvercle anti-fuite (7) et percé avec un trou traversant polygonal (75) dans son centre, et s'étendant vers le bas depuis sa partie inférieure avec une projection (76) à loger dans ledit trou traversant (71) dudit couvercle anti-fuite (7) ;
une base inférieure (8) positionnée au-dessous dudit couvercle (4) à l'intérieur de ladite chambre en évidement (21) dudit corps principal (2) et pourvue d'une chambre (81) formée à l'intérieur de celle-ci, une paire de projections (82) formées symétriquement autour d'une bordure supérieure de ladite chambre (81), une paire d'encoches (83) taillées symétriquement autour d'une paroi de ladite base inférieure (8), une bordure de blocage annulaire (84) formée autour d'une paroi extérieure supérieure de ladite base inférieure (8), un trou traversant (85) et une pluralité de sorties de poudre (86) percées au niveau du fond de ladite de base inférieure (8), et une paire de rubans de blocage (87) formés symétriquement au niveau du fond de ladite chambre (81) ; et
une base rotative d'ajustement (9) assemblée avec ladite base inférieure (8) et pourvue d'une chambre (90) formée à l'intérieur d'elle-même, une gorge de blocage (91) formée dans une paroi intérieure supérieure de ladite chambre (90), une pluralité d'ouvertures (92) formées au niveau du fond de ladite chambre (90), une paire d'encoches (93) taillées symétriquement autour d'une paroi de ladite base rotative d'ajustement (9), et une pluralité de gorges de positionnement (94) avec divers niveaux formés de façon inclinée au-dessous de chacune desdites encoches (93).

2. Moulin pour moudre des particules comestibles selon la revendication 1, dans lequel ledit bloc de positionnement (24) dudit corps principal (2) est pourvu d'un trou taraudé (25) pour engager un filetage (30) formé autour d'une extrémité supérieure dudit arbre (3).

3. Moulin pour moudre des particules comestibles selon la revendication 1, dans lequel ledit couvercle (4) est pourvu d'une projection annulaire (44) formée à sa partie inférieure pour s'engager dans une gorge annulaire (80) formée autour d'une bordure supérieure de ladite base inférieure (8).
